# EUROPÄISCHE PATENTSCHRIFT

(11) **EP 2 773 213 B1**
(45) Veröffentlichungstag und Bekanntmachung des Hinweises auf die Patenterteilung: **25.03.2020**
(21) Anmeldenummer: 12780176.9
(22) Anmeldetag: 26.10.2012
(51) Int. Cl.: A01N 63/00, A01P 3/00, A01N 43/50

(54) **BEHANDLUNG UND/ODER PROPHYLAXE VON LAGERKRANKHEITEN BEI ERNTEGUT**
TREATMENT AND/OR PROPHYLAXIS OF STORAGE DISEASES OF CROP MATERIAL
TRAITEMENT ET/OU PROPHYLAXIE DES MALADIES LORS DU STOCKAGE DES RECOLTES

(30) Priorität: 04.11.2011 DE 102011117895
(43) Veröffentlichungstag der Anmeldung: 10.09.2014
(73) Patentinhaber: SP Sourcon Padena GmbH, 72070 Tübingen (DE)
(72) Erfinder: VOGT, Wolfgang, 72072 Tuebingen (DE)
(74) Vertreter: Witte, Weller & Partner Patentanwälte mbB
(86) Internationale Anmeldenummer: PCT/EP2012/071278
(87) Internationale Veröffentlichungsnummer: WO 2013/064430

(56) Entgegenhaltungen:
- WO-A1-01/03507
- WO-A2-01/40441
- WO-A2-2011/051104
- WO-A2-2011/051105

## Beschreibung

Die vorliegende Erfindung betrifft die Behandlung und/oder Prophylaxe von Lagerkrankheiten bei Erntegut.

Nach dem Einholen der Ernte wird das Erntegut bis zur Weiterverarbeitung oder dem Verkauf in meist großen Mengen in Lagerräumen eingelagert. Während dieser Lagerung kann es zum Auftreten so genannter Lagerkrankheiten kommen, die das Erntegut schädigen. Lagerkrankheiten führen nicht nur zu direkten Verlusten beim Erntegut, sie verursachen auch eine Qualitätsminderung auf Dauer durch die Schädigung der Vermehrungskette des Pflanzgutes.

Bekannte Lagerkrankheiten bei der Kartoffelpflanze *(Solanum tuberosum)* sind die Knollenfäulen und Schorfkrankheiten. Zu den Knollenfäulen zählen die Braunfäule, die Kartoffelpocken, die Nassfäule und die Kartoffeltrockenfäule. Zu den Schorfkrankheiten zählen der gewöhnliche Schorf, der Pulverschorf und der Silberschorf.

Der Silberschorf gerät immer häufiger ins Blickfeld, wenn es um die Qualität von Kartoffeln geht. Er fällt durch die silbrig-graubraunen Flecken auf, die er auf der Kartoffelschale bildet. Der Erreger des Silberschorfes ist der Pilz *Helminthosporium solani.* Er ist nicht verwandt mit dem gewöhnlichen Kartoffelschorf, der durch ein Bakterium hervorgerufen wird, oder dem Pulverschorf, der durch einen niederen Pilz hervorgerufen wird. *Helminthosporium solani* gehört zu der Klasse der Ascomyceten, den so genannten echten Schlauchpilzen. *Helminthosporium solani* befällt nur die Kartoffelknolle. An der oberirdischen Kartoffenpflanze ist er nicht zu finden. Die Krankheit ist auf die Knollenoberfläche beschränkt. Zu Zeiten der Ernte sind leicht eingesunkene, bräunliche Flecken sichtbar. Diese werden im Lager mit zunehmendem Alter dunkler und erscheinen silbrig. Der Befall kann sich über die gesamte Oberfläche der Knolle ausbreiten. Die Konidienträger des Pilzes mit den dunklen Sporen erscheinen vorwiegend am Rand der Flecken und können diesen ein angerußtes Aussehen geben. Die silbrige Fleckung kommt dadurch zustande, dass sich der Erreger in der Korkschicht der Knollenschale entwickelt und diese vom Rindenparenchym ablöst. Die Zerstörung der Knollenschale begünstigt den natürlichen Wasserverlust durch Verdunstung, da die Schale als natürliche Verdunstungsbarriere außer Kraft gesetzt wird. Der Silberschorfbefall führt damit zur Gewichtsreduktion von Kartoffelknollen und ihrer vorzeitigen Eintrocknung Als weiterer Schadfaktor wirkt die Tatsache, dass auch die sogenannten Augen bzw. Keime der Kartoffeln befallen und abgetötet werden können, was zu einem verminderten und lückenhaften Aufgehen von befallenem Pflanzgut führt. Im Ergebnis ist die Kartoffelknolle nicht mehr genießbar.

Der Entstehung von Lagerkrankheiten, wie dem Silberschorf, wird derzeit vor allem durch Beizung des Erntegutes vorgebeugt. Hierzu stehen verschiedene Chemikalien zur Verfügung. Die wichtigste Chemikalie stellt hierbei das Imazalil dar, das bspw. unter dem Handelsnamen Magnate® vertrieben wird. Nachteilig ist, dass Imazalil umweltgefährlich und gesundheitsschädlich ist. Imazalil ist für Fische giftig und verursacht Schäden bei Vögeln und Enten. Die Halbwertszeit für den Abbau im Boden beträgt etwa ein halbes Jahr. Imazalil verbleibt im Boden und wird nicht ausgewaschen. WO01/03507 beschreibt den Einsatz von *Pseudomonas corrugata* u.a. gegen Silberschorf in Kulturen.

Vor diesem Hintergrund liegt der vorliegenden Erfindung die Aufgabe zugrunde, ein alternatives Mittel zur Behandlung und/oder Prophylaxe von Lagerkrankheiten bei Erntegut bereitzustellen, mit dem die Nachteile der derzeit verwendeten chemischen Mittel vermieden werden.

Diese Aufgabe wird durch die Verwendung des Bakteriums *Pseudomonas sp.* Proradix (DSMZ 13134) gelöst, wobei die Lagerkrankheit durch den Pilz *Helminthosporium solani* (Silberschorf) hervorgerufen wird und das Erntegut mit einer das Bakterium *Pseudomonas sp.* Proradix (DSM7 13134) enthaltenden Lösung in Kontakt gebracht wird und es sich bei dem Erntegut um Knollen der Kartoffelpflanze *(Solanum tuberosum)* handelt.

Diese Aufgabe wird ferner durch ein Verfahren gelöst, das folgende Schritte aufweist:
a) Bereitstellung von Erntegut,
b) Inkontaktbringen des Erntegutes mit einer das Bakterium *Pseudomonas sp.* Proradix (DSMZ 13134) enthaltenden Lösung, und
c) Einlagern des Erntegutes außerhalb des Erdreiches,
wobei die Lagerkrankheit durch den Pilz *Helminthosporium solani* (Silberschorf) hervorgerufen wird und es sich bei dem Erntegut um Knollen der Kartoffelpflanze *(Solanum tuberosum)* handelt.

Bei dem Pseudomonas-Stamm Proradix, der am 3. November 1999 unter der Hinterlegungsnummer DSM 13134 bei der DSMZ, 38124 Braunschweig, Deutschland, nach dem Budapester Vertrag hinterlegt wurde, handelt es sich um eine Spezies innerhalb der RNA-Gruppe I der Pseudomonadaceae. Eine endgültige Zuordnung von Proradix ist bislang noch nicht erfolgt, wobei es Hinweise auf eine Verwandtschaft mit *Pseudomonas fluorescens* gibt.

Die Wirksamkeit des Pseudomonas-Stammes Proradix zur Prophylaxe und Behandlung von Lagerkrankheiten bei Erntegut war überraschend und so nicht zu erwarten.

Der hinterlegte Pseudomonas-Stamm Proradix wird ausführlich in der WO 01/40441 beschrieben, auf die hiermit Bezug genommen wird. Dort wird eine Wirkung von Proradix gegen die Schwarzfäule beim Salat und Braunfäule bei Kartoffelknollen beschrieben. Beide Pflanzenkrankheiten werden durch den Basidienpilz *Rhizoctonia solani* ausgelöst.

In der WO 2011/051104 wird die Wirkung von Proradix gegen einen Befall der Kartoffelknolle oder Gurke durch die "Eipilze" oder Peronosporomyceten *Phytophthora* und *Pythium* beschrieben.

In der WO 2011/051105 wird die Wirkung von Proradix gegen den Befall der Kartoffelknolle mit dem Bakterium *Erwina sp.* beschrieben.

In der Literatur wird außerdem erwähnt, dass der Pseudomonas-Stamm Proradix vor einem Befall von Pflanzen bzw. Saatgut durch den Pilz der Gattung *Fusarium* sp. Schutz bietet.

In sämtlichen, im Stand der Technik beschriebenen Fällen zeigt der Pseudomonas-Stamm Proradix seine protektiven Wirkungen ausschließlich im Erdreich.

Dazu wird das Saatgut, bspw. die Knollen einer Saatkartoffel, vor dem Einbringen in den Boden mit dem Pseudomonas-Stamm Proradix inkubiert. Im Stand der Technik wird deshalb angenommen, dass Proradix das Erdreich als natürliche Umgebung seines Lebensraums benötigt, um die beschriebenen protektiven Wirkungen auf die Pflanzen und deren Früchte zu zeigen.

Es war deshalb überraschend und nicht zu erwarten, dass Proradix auch außerhalb des Erdreiches, nämlich bspw. im Kartoffellager, protektive Wirkungen gegen Lagerkrankheiten wie den Silberschorf zeigt. In den Lagern herrschen vollkommen andere klimatische Bedingungen als im Erdreich. So können bspw. über längere Zeit niedrige Temperaturen von ca. 4°C vorherrschen. Ferner fehlen weitgehend die durch das Erdreich und die Wurzel bereitgestellten Nährstoffe und das Feuchtigkeitsmilieu. Bei derartigen Bedingungen sind weder hohe physiologische Aktivitäten des Pseudomonas-Stammes Proradix noch die Induktion von Abwehrmechanismen in dem Erntegut zu erwarten. Gleichwohl konnten die Erfinder bei der Kartoffelknolle nach einer Behandlung mit Proradix vor der Einlagerung außerhalb des Erdreiches eine Reduzierung des Silberschorfbefalls um ca. 50 % im Vergleich zu unbehandelten Kartoffelknollen beobachten.

Im Gegensatz zu den bislang zur Behandlung von Lagerkrankheiten eingesetzten Chemikalien kommt es bei der Verwendung von Proradix zu keinerlei toxischen Rückständen. Die Erfindung ist deshalb auch in ökologisch wirtschaftenden Betrieben einsetzbar.

Unter "Erntegut" werden erfindungsgemäß landwirtschaftliche Früchte und Gewächse bezeichnet, die aus ihrem natürlichen Lebensraum zu Zwecken des späteren Verzehrs oder der Weiterverarbeitung entfernt wurden. Erfindungsgemäß wichtige Erntegüter stellen Knollenfrüchte dar, wie die Kartoffelknolle.

Unter "Einlagern" wird erfindungsgemäß das Einbringen des Erntegutes in Lagerstätten, d.h. außerhalb des Erdreiches, verstanden. Solche Lagerstätten sind i.d.R. dunkle Räume oder Hallen, die über das Jahr Temperaturen von 4°C bis 10°C und eine Luftfeuchtigkeit von ca. 90% aufweisen, um ein Auskeimen oder ein "Erfrieren" des Erntegutes zu verhindern.

Die der Erfindung zugrundeliegende Aufgabe wird hiermit vollkommen gelöst.

Die Lagerkrankheit wird durch den Pilz *Helminthosporium solani* (Silberschorf) hervorgerufen.

Diese Maßnahme hat den Vorteil, dass mit der Erfindung zielgerichtet eine der wichtigsten Lagerkrankheiten bekämpft wird. Wie die Erfinder demonstrieren konnten, zeigt der Pseudomonas-Stamm Proradix gerade bei Silberschorf eine hervorragende Wirkung.

Bei dem erfindungsgemäßen Verfahren ist es bevorzugt, wenn vor Schritt a) folgende Schritte durchgeführt werden:
a') Bereitstellung von Knollen der Kartoffelpflanze *(Solanum tuberosum),*
a") Inkontaktbringen der Knollen mit einer das Bakterium *Pseudomonas sp.* Proradix (DSMZ 13134) enthaltenden Lösung,
a'") Einbringen der Knollen in das Erdreich,
a"") Kultivieren der Knollen in dem Erdreich, und
a""') Gewinnen des Erntegutes.

Diese Maßnahme hat den Vorteil, dass eine von den Erfindern erstmals erkannte synergistische Wirkung des Pseudomonas-Stammes Proradix auf das Erntegut erzeugt wird. Bei dieser Weiterbildung erfolgt eine zweimalige Behandlung des Gutes mit dem Proradix, nämlich zunächst bei dem Legen, d.h. bei dem Einbringen der Pflanzen bzw. dem Saatgut in das Erdreich, und ein weiteres Mal, nämlich vor dem Einlagern des Erntegutes in die Lagerstätte. Wie die Erfinder feststellen konnten, wird durch eine solche zweifache Behandlung der Silberschorfbefall drastisch reduziert. Dabei ist die beobachtete Wirkung durch doppelte Behandlung, synergistisch, d.h. größer als die Summe der jeweiligen Wirkungen bei einfacher Behandlung des Gutes entweder nur bei dem Legen oder nur vor dem Einlagern.

Bei dem erfindungsgemäßen Verfahren ist es bevorzugt, wenn in Schritt b) und ggf. Schritt a") die Lösung durch Beizen, Besprühen oder Tauchbehandlung des Erntegutes und ggf. der Pflanzen/des Saatgutes aufgebracht wird.

Wie die Erfinder feststellen konnten, ist mitentscheidend für die optimale Wirkung eine gleichmäßige Benetzung der Oberfläche des Erntegutes bzw. der Pflanzen oder des Saatgutes. Diese gleichmäßige Benetzung kann durch die vorstehend genannten Maßnahmen realisiert werden.

Bei der erfindungsgemäßen Verwendung und dem erfindungsgemäßen Verfahren handelt es sich bei dem Erntegut und ggf. bei dem Saatgut um Knollen der Kartoffelpflanze *(Solanum tuberosum).*

Diese Maßnahme hat den Vorteil, dass eine der wichtigsten Kulturpflanzen mit großer wirtschaftlicher Bedeutung, die sehr häufig von Lagerkrankheiten wie dem Silberschorf betroffen ist, wirksam geschützt bzw. behandelt werden kann. Wie die Erfinder demonstrieren konnten, führt Proradix gerade hier zu besonders guten Ergebnissen.

Nach einer bevorzugten Weiterbildung der erfindungsgemäßen Verwendung wird das Bakterium *Pseudomonas sp.* Proradix in Kombination mit einer gegen die Lagerkrankheit wirksamen Chemikalie eingesetzt wie bspw. dem Imazalil.

Dementsprechend wird nach einer bevorzugten Weiterbildung des erfindungsgemäßen Verfahrens anstatt Schritt (a") folgender Schritt durchgeführt:
(a*) Inkontaktbringen der Knollen mit einer gegen die Lagerkrankheit wirksamen Chemikalie, wie bspw. dem Imazalil.

Wie die Erfinder festgestellt haben, wird die Wirksamkeit des Pseudomonas-Stammes Proradix durch Kombination mit den bislang im Stand der Technik eingesetzten Chemikalien, wie bspw. Imazalil, nicht eingeschränkt. Dies war auch deshalb überraschend, da angenommen wurde, die Chemikalie schädigt das Bakterium Proradix derart, dass jede protektive Aktivität verloren geht. Wie die Erfinder feststellen konnten, bleibt jedoch die protektive Aktivität von Proradix nach dem Einsatz der Chemikalien erhalten. Im Gegenteil konnte beobachtet werden, dass die Wirkung der Chemikalie durch den Pseudomonas-Stamm Proradix nochmals verstärkt wird, insbesondere wenn die Chemikalie beim Legen des Saatgutes und Proradix vor dem Einlagern des Erntegutes eingesetzt werden.

Folglich kann der Pseudomonas-Stamm Proradix im Rahmen einer Monotherapie gegen die Lagerkrankheit als alleiniger Wirkstoff, aber auch in Kombination mit anderen Wirkstoffen eingesetzt werden. Dadurch können sich synergistische Effekte ergeben.

Der erfindungsgemäße Pseudomonas-Stamm Proradix kann in beliebiger Formulierung bereitgestellt werden, bspw. als Lösung in Form einer "Lagerbeize" oder aber als Pulver. Derartige Formulierungen sind dem Fachmann bekannt. Formulierungsbeispiele werden in der WO 01/40441 angegeben, auf die explizit Bezug genommen wird. Geeignet sind außerdem die Formulierungen, die von der Firma Sourcon-Padena GmbH & Co. KG, Tübingen, Deutschland, bereitgestellt und vertrieben werden.

Die Offenbarung betrifft ferner ein Verfahren zur Herstellung eines Mittels zur Behandlung und/oder Prophylaxe von Lagerkrankheiten bei Erntegut, mit folgenden Schritten:
(a) Bereitstellung des Bakterium *Pseudomonas sp.* Proradix (DSMZ 13134) in einer pflanzentherapeutisch wirksamen Menge, und
(b) Formulierung des Bakteriums.

Die Merkmale, Vorteile und Eigenschaften der erfindungsgemäßen Verwendung und des erfindungsgemäßen Behandlungsverfahrens gelten für das erfindungsgemäße Herstellungsverfahren gleichermaßen.

Die Erfindung wird nun anhand von Ausführungsbeispielen näher erläutert, aus denen sich weitere Eigenschaften, Merkmale und Vorteile ergeben. Die Ausführungsbeispiele dienen der Illustration und schränken die Reichweite der Erfindung nicht ein.

Dabei wird Bezug genommen auf die beigefügten Figuren, in denen Folgendes dargestellt ist:
- Fig. 1: zeigt die Wirkung von Proradix auf den Silberschorfbefall von Kartoffelknollen nach der Einlagerung bei einer Behandlung der Kartoffelknolle beim Legen oder/und vor der Einlagerung (Feldversuch 2010/2011 in Deutschland);
- Fig. 2: zeigt die Wirkung von Proradix im Vergleich zu der Chemikalie Imazalil auf die Neubildung von Sporen des Silberschorferregers auf der Kartoffelknolle nach der Einlagerung bei einer Behandlung der Kartoffelknolle beim Legen oder/und vor der Einlagerung (Feldversuch 2010/2011 in den Niederlanden);
- Fig. 3: zeigt die Wirkung von Proradix im Vergleich zu der Chemikalie Imazalil auf die Keimungsrate der Sporen des Silberschorferregers auf der Kartoffelknolle nach der Einlagerung bei einer Behandlung der Kartoffelknolle beim Legen oder/und vor der Einlagerung (Feldversuch 2010/2011 in den Niederlanden);
- Fig. 4: zeigt die Wirkung von Proradix auf den Silberschorfbefall von Kartoffelknollen nach der Einlagerung bei einer Behandlung der Kartoffelknolle beim Legen und vor der Einlagerung (Feldversuch 2009/2010 in den Niederlanden);
- Fig. 5: zeigt die Wirkung von Proradix in Kombination mit der Chemikalie Imazalil auf den Silberschorfbefall von Kartoffelknollen nach Einlagerung bei einer Behandlung der Kartoffelknolle beim Legen oder/und vor der Einlagerung.

### Beispiel 1: Isolation von Proradix

Die Isolation des Bakteriums *Pseudomonas sp.* Proradix ist ausführlich in der WO 01/40441, dortiges Beispiel 1, beschrieben. Hierauf wird explizit Bezug genommen und die dortige Offenbarung zur Offenbarung der vorliegenden Anmeldung gemacht. Das Bakterium ist ferner erhältlich bei der Firma Sourcon-Padena GmbH & Co. KG, Tübingen, Deutschland.

### Beispiel 2: Dosierung und Applikation

Zur Behandlung der Saatkartoffel beim bzw. vor dem Legen in das Erdreich wird Proradix als Flüssigbeize [Proradix WG (LF 4816-00); Sourcon-Padena GmbH & Co. KG, Tübingen, Deutschland] nach Angaben des Herstellers in einer Konzentration von 60 g/ha im Sprühverfahren unter Verwendung eines ULV-Sprühgerätes eingesetzt. Vor dem Einlagern der Kartoffeln wurden 20 g Proradix WG in maximal 2 l Wasser pro Tonne gelöst. Die Applikation auf die Kartoffeln erfolgte ebenfalls mittels eines ULV-Sprühgerätes.

### Beispiel 3: Feldversuche

Das Legen der Kartoffel und ggf. die Behandlung mit Proradix und/oder Imazalil erfolgte im Frühjahr und die Ernte und Einlagerung sowie ggf. Behandlung mit Proradix und/oder Imazalil im Herbst desselben Jahres.

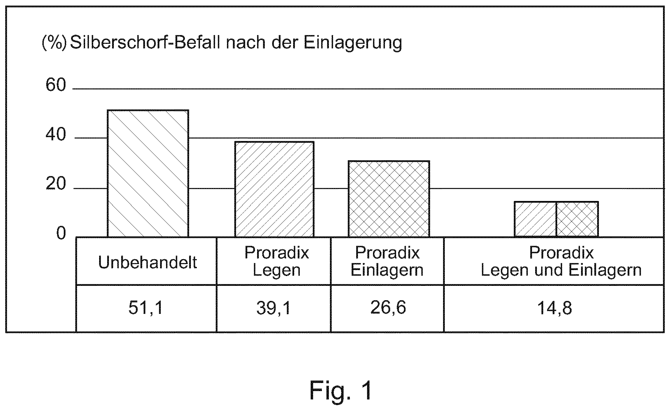

In einem in den Jahren 2010/2011 in Deutschland nach den EPPO-Richtlinien durchgeführten Feldversuch wurde die Wirkung von Proradix auf den Silberschorfbefall bei der Kartoffelknolle nach der Einlagerung in die Lagerstätte untersucht. Dazu wurde ein Teil der Kartoffelknollen gänzlich unbehandelt gelassen, ein anderer Teil wurde nur beim Legen behandelt, ein anderer Teil nur vor der Einlagerung und ein weiterer Teil sowohl beim Legen als auch vor dem Einlagern. Nach einer Einlagerungszeit von 20 Wochen wurden die Kartoffeln auf Silberschorfbefall untersucht. Das Ergebnis ist in der Fig. 1 dargestellt.

Es zeigt sich, dass über 50 % der Oberfläche der unbehandelten Kartoffeln einen Silberschorfbefall nach der Einlagerung zeigen (Fig. 1, erste Säule). Bei einer Behandlung der Kartoffeln mit Proradix ausschließlich beim Legen zeigt sich nach der Einlagerung ein um ca. 25 % reduzierter Silberschorfbefall (absolut: 39,1 %; Fig. 1, zweite Säule). Bei einer Behandlung der Kartoffeln mit Proradix ausschließlich vor dem Einlagern zeigt sich bereits eine Reduzierung des Silberschorfbefalls um beinahe 50 % (absolut: 26,6%; Fig. 1, dritte Säule). Bei einer Behandlung der Kartoffeln mit Proradix sowohl beim Legen als auch vor dem Einlagern zeigt sich eine drastische Reduzierung des Silberschorfbefalls nach der Einlagerung um über 70 % im Vergleich zur unbehandelten Kartoffel (absolut: 14,8 %; Fig. 1, vierte Säule), was auf eine synergistische Wirkung schließen lässt (Fig.1; vgl. vierte mit zweiter und dritter Säule).

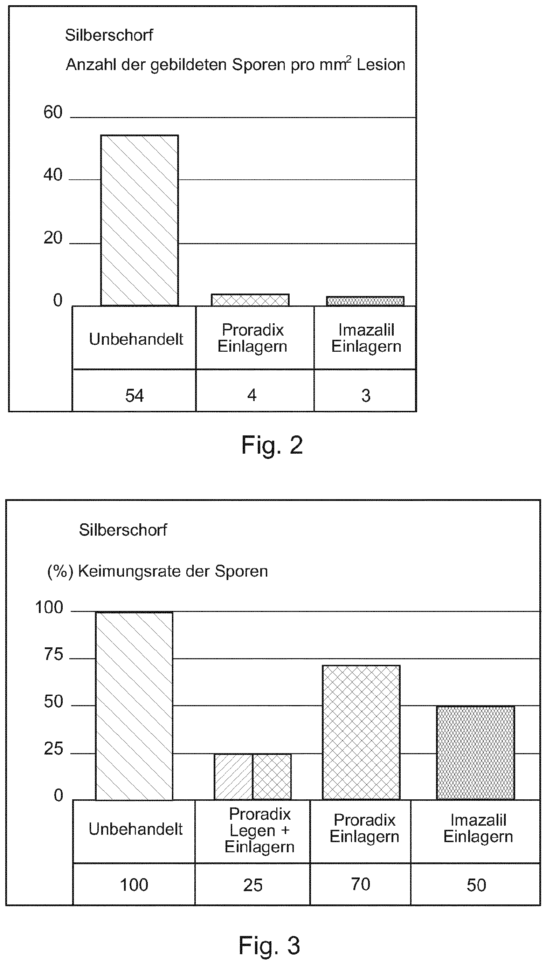

In einem weiteren, in den Jahren 2010/2011 in den Niederlanden nach den EPPO-Richtlinien durchgeführten Feldversuch wurde der Einfluss von Proradix im Vergleich zu dem chemischen Standard Imazalil auf die Sporenproduktion des pilzlichen Erregers *Helminthosporium solani,* dem Verursacher des Silberschorfs, und die Keimungsrate der Sporen auf der Kartoffelknolle untersucht. Die Ergebnisse sind in den Fig. 2 und 3 dargestellt.

Es zeigt sich deutlich, dass durch die Behandlung der Kartoffel mit Proradix vor dem Einlagern eine drastische Reduzierung der Sporenbildung erreicht wird (Fig. 2; zweite Säule), die vergleichbar ist mit jener, die durch die Chemikalie Mazalil erzielt wird (Fig. 2; dritte Säule).

Bei der Untersuchung der Sporenbildung zeigt sich, dass besonders bei kombinierter Anwendung von Proradix beim Legen als auch vor dem Einlagern der Kartoffeln im Vergleich zu unbehandelten Kartoffeln nur ein Viertel der gebildeten Sporen in der Lage ist, zu keimen (Fig. 3; zweite Säule). Hier zeigt Proradix deutliche Vorteile gegenüber der Chemikalie Imazalil, bei deren Verwendung vor dem Einlagern noch die hälfte der Sporen in der Lage ist, zu keimen (Fig. 3; vierte Säule).

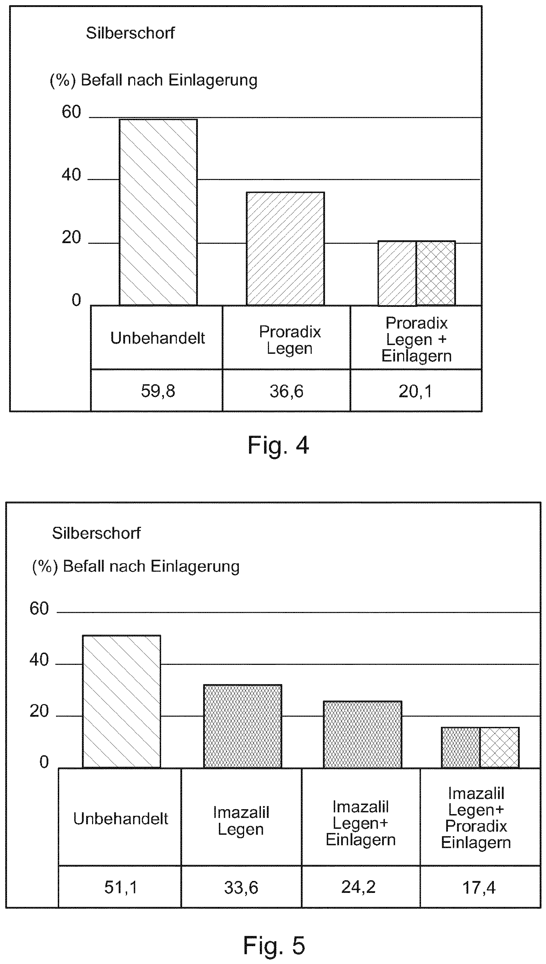

In einem weiteren Feldversuch, der in den Jahren 2009 und 2010 in Deutschland nach den EPPO-Richtlinien durchgeführt wurde, bestätigen sich die in der Fig. 1 dargestellten Ergebnisse. Das Ergebnis dieses Feldversuches ist in der Fig. 4 dargestellt.

In einem in den Jahren 2010 und 2011 in Deutschland nach EPPO-Richtlinien durchgeführten Feldversuch wurde im Detail untersucht, ob Proradix auch in Kombination mit der Chemikalie Imazalil wirksam eingesetzt werden kann. Dazu wurde ein Teil der Kartoffeln unbehandelt gelassen, ein Teil beim Legen mit der Chemikalie Imazalil behandelt, ein Teil sowohl beim Legen als auch vor dem Einlagern mit der Chemikalie Imazalil behandelt, und ein weiterer Teil beim Legen mit Imazalil und vor dem Einlagern mit Proradix behandelt. Das Ergebnis ist in der Fig. 5 dargestellt.

Dabei zeigt sich, dass die Anwendung von Imazalil beim Legen kombiniert mit der Anwendung von Proradix vor dem Einlagern im Vergleich zu unbehandelten Kartoffeln zu einer drastischen Reduzierung des Silberschorfbefalls nach Einlagerung führt (Fig. 5; vgl. vierte mit erster Säule), wohingegen eine Behandlung der Kartoffeln beim Legen und Einlagern ausschließlich mit Imazalil zu einer deutlich geringeren Reduzierung des Silberschorfbefalls nach Einlagerung führt (Fig. 5; vgl. dritte mit erster Säule).

### Fazit

Die Erfinder konnten am Beispiel der Kartoffel und des Silberschorfes zeigen, dass der Pseudomonas-Stamm Proradix zur Behandlung und/oder Prophylaxe von Lagerkrankheiten bei Erntegut eingesetzt werden kann. Die protektiven Wirkungen des Pseudomonas-Stamms Proradix wurden bislang nur in Fällen beschrieben, in denen das Bakterium in das Erdreich und an die Wurzel gebracht und damit in seinen natürlichen Lebensraum wurde. Der Pseudomonas-Stamm Proradix stellt damit als biologische Lagerbeize eine besonders umweltfreundliche Alternative zu den bisher verwendeten Chemikalien dar.

## Patentansprüche

1. Verwendung des Bakteriums *Pseudomonas sp.* Proradix (DSMZ 13134) zur Behandlung und/oder Prophylaxe von Lagerkrankheiten bei Erntegut, **dadurch gekennzeichnet, dass** die Lagerkrankheit durch den Pilz *Helminthosporium solani* (Silberschorf) hervorgerufen wird, und das Erntegut mit einer das Bakterium *Pseudomonas sp.* Proradix (DSMZ 13134) enthaltenden Lösung in Kontakt gebracht wird, und es sich bei dem Erntegut um Knollen der Kartoffelpflanze (*Solanum tuberosum*) handelt.

2. Verwendung nach Anspruch 1, **dadurch gekennzeichnet, dass** das Bakterium in Kombination mit einer gegen die Lagerkrankheit wirksamen Chemikalie eingesetzt wird.

3. Verwendung nach Anspruch 2, **dadurch gekennzeichnet, dass** es sich bei der Chemikalie um Imazalil handelt.

4. Verfahren zur Behandlung und/oder Prophylaxe von Lagerkrankheiten bei Erntegut, das folgende Schritte aufweist:
a) Bereitstellung von Erntegut,
b) Inkontaktbringen des Erntegutes mit einer das Bakterium *Pseudomonas sp.* Proradix (DSMZ 13134) enthaltenden Lösung, und
c) Einlagern des Erntegutes außerhalb des Erdreiches,
**dadurch gekennzeichnet, dass** die Lagerkrankheit durch den Pilz *Heiminthosporium solani* (Silberschorf) hervorgerufen wird, und es sich bei dem Erntegut um Knollen der Kartoffelpflanze *(Solanum tuberosum)* handelt.

5. Verfahren nach Anspruch 4, das vor Schritt (a) folgende Schritte aufweist:
a') Bereitstellung von Knollen der Kartoffelpflanze *(Solanum tuberosum),*
a") Inkontaktbringen der Knollen mit einer das Bakterium *Pseudomonas sp.* Proradix (DSMZ 13134) enthaltenden Lösung,
a"') Einbringen der Knollen in das Erdreich,
a"") Kultivieren der Knollen in dem Erdreich, und
a'"") Gewinnen des Erntegutes.

6. Verfahren nach einem der Ansprüche 6 bis 8, **dadurch gekennzeichnet, dass** in Schritt (b) und ggf. Schritt (a") die Lösung durch Beizen, Besprühen oder Tauchbehandlung der Erntegutes und ggf. der Pflanzen/des Saatgutes aufgebracht wird.

7. Verfahren nach Anspruch 5 und 6, **dadurch gekennzeichnet, dass** anstatt Schritt (a") folgender Schritt durchgeführt wird:
(a*) Inkontaktbringen der Knollen mit einer gegen die Lagerkrankheit wirksamen Chemikalie.

8. Verfahren nach Anspruch 7, **dadurch gekennzeichnet, dass** es sich bei der Chemikalie um Imazalil handelt.

## Claims

1. Use of the bacterium of *Pseudomonas sp.* Proradix (DMSZ 13134) for the treatment and/or prophylaxis of storage diseases of harvested material, **characterized in that** the storage disease is caused by the fungus of *Helminthosporium solani* (silver scurf), and that the harvested material is contacted with a solution containing the bacterium of *Pseudomonas sp.* Proradix (DMSZ 13134), and that the harvested material are tubers of the potato plant *(Solanum tuberosum).*

2. Use of claim 1, **characterized in that** the bacterium is employed in combination with a chemical that is effective against the storage disease.

3. Use of claim 2, **characterized in that** the chemical is Imazalil.

4. Method for the treatment and/or prophylaxis of storage diseases of harvested material, comprising the following steps:
a) providing of harvested material,
b) contacting of said harvested material with a solution containing the bacterium of *Pseudomonas sp.* Proradix (DSMZ 13134), and
c) storing of said harvested material outside of the ground soil,
**characterized in that** the storage disease is caused by the fungus of *Helminthosporium solani* (silver scurf), and that the harvested material are tubers of the potato plant *(Solanum tuberosum).*

5. Method of claim 4, comprising before the step a) the following steps:
a') providing of tubers of the potato plant *(Solanum tuberosum),*
a") contacting of said tubers with a solution containing the bacterium of *Pseudomonas sp.* Proradix (DSMZ 13134),
a'") introducing of said tubers into the ground soil,
a"") cultivating of said tubers in the ground soil, and
a'"") yielding of the harvested material.

6. Method of any of claims 6 to 8, **characterized in that** in step b) and, if applicable, step a") the solution is applied by mordanting, spraying or immersing of the harvested material and, if applicable, the plants/seed material.

7. Method of claim 5 or 6, **characterized in that** instead of step a") the following step is performed:
a*) contacting the tubers with a chemical which is effective against the storage disease.

8. Method of claim 7, **characterized in that** the chemical is Imazalil.

## Revendications

1. Utilisation de la bactérie Pseudomonas sp. Proradix (DSMZ 13134) pour le traitement et/ou la prophylaxie de maladies de conservation pour un produit récolté, **caractérisée en ce que** la maladie de conservation est causée par le champignon Helminthosporium solani (gale argentée), et le produit récolté est mis en contact avec une solution contenant la bactérie Pseudomonas sp. Proradix (DSMZ 13134), et le produit récolté est des tubercules est la plante de pomme de terre (Solanum tuberosum).

2. Utilisation selon la revendication 1, **caractérisée en ce que** la bactérie est utilisée en combinaison avec un produit chimique efficace contre la maladie de conservation.

3. Utilisation selon la revendication 2, **caractérisée en ce que** le produit chimique est l'imazalil.

4. Procédé de traitement et/ou de prophylaxie de maladies de conservation pour un produit récolté, qui présente les étapes suivantes :
a) la fourniture du produit récolté,
b) la mise en contact du produit récolté avec une solution contenant la bactérie Pseudomonas sp. Proradix (DSMZ 13134), et
c) le stockage du produit récolté à l'extérieur du sol,
**caractérisée en ce que** la maladie de conservation est causée par le champignon Helminthosporium solani (gale argentée), et le produit récolté est des tubercules de la plante de pomme de terre (Solanum tuberosum).

5. Procédé selon la revendication 4, qui présente avant l'étape a) les étapes suivantes :
a') la fourniture de tubercules de la plante de pomme de terre (Solanum tuberosum),
a") la mise en contact des tubercules avec une solution contenant la bactérie Pseudomonas sp. Proradix (DSMZ 13134),
a'") l'introduction des tubercules dans le sol,
a"") la culture des tubercules dans le sol, et
a'"") l'obtention du produit récolté.

6. Procédé selon l'une quelconque des revendications 6 à 8, **caractérisé en ce que**, à l'étape (b) et éventuellement l'étape (a"), la solution est appliquée par décapage, pulvérisation ou traitement par immersion du produit récolté et éventuellement des plantes/de la graine.

7. Procédé selon la revendication 5 et 6, **caractérisé en ce que**, au lieu de l'étape (a"), l'étape suivante est effectuée :
(a*) la mise en contact des tubercules avec un produit chimique efficace contre la maladie de conservation.

8. Procédé selon la revendication 7, **caractérisé en ce que** le produit chimique est l'imazalil.
